# EUROPÄISCHE PATENTSCHRIFT

(11) **EP 2 916 950 B1**
(45) Veröffentlichungstag und Bekanntmachung des Hinweises auf die Patenterteilung: **13.12.2017**
(21) Anmeldenummer: 13785391.7
(22) Anmeldetag: 22.10.2013
(51) Int. Cl.: G01N 21/75, B01L 3/00

(54) **TESTSET FÜR EINE PHOTOMETRISCHE MESSEINRICHTUNG UND PHOTOMETRISCHES MESSVERFAHREN FÜR EINE PROBENFLÜSSIGKEIT**
TEST SET FOR A PHOTOMETRIC MEASURING DEVICE, AND PHOTOMETRIC MEASURING METHOD FOR A SAMPLE LIQUID
ENSEMBLE D'ESSAI POUR UN DISPOSITIF DE MESURE PHOTOMÉTRIQUE, ET PROCÉDÉ DE MESURE PHOTOMÉTRIQUE POUR UN LIQUIDE ÉCHANTILLON

(30) Priorität: 06.11.2012 AT 504892012
(43) Veröffentlichungstag der Anmeldung: 16.09.2015
(73) Patentinhaber: Bonecker, Gerhard, 6340 Baar (CH)
(72) Erfinder: Bonecker, Gerhard, 6340 Baar (CH)
(74) Vertreter: Babeluk, Michael
(86) Internationale Anmeldenummer: PCT/EP2013/072037
(87) Internationale Veröffentlichungsnummer: WO 2014/072170

(56) Entgegenhaltungen:
- EP-A1- 1 652 787
- WO-A2-2007/053870
- AT-A1- 502 693
- AT-A1- 508 708
- US-A1- 2008 260 581
- US-A1- 2010 180 773

## Beschreibung

Die Erfindung betrifft ein Testset für eine photometrische Messeinrichtung, mit einem Mischbehälter der eine Füllöffnung aufweist, sowie mit einem dichtend in die Füllöffnung des Mischbehälters einsetzbaren Dosierbehälter, der in einem verschlossenen Hohlraum ein flüssiges Reagenzmittel enthält, wobei der Hohlraum an einem ersten Ende des Dosierbehälters einen in den Hohlraum axial verschiebbaren Verschlusskolben aufweist, der einen vorgebbaren Fülldruck im Reagenzmittel erzeugt und der Dosierbehälter an seinem zweiten, in den Mischbehälter einsetzbaren Ende eine Verschlussmembran aufweist. Weiters betrifft die Erfindung ein photometrisches Messverfahren für eine Probenflüssigkeit.

Bei vielen medizinischen Tests muss die zu vermessende Probe zunächst mit einer ersten Flüssigkeit in Kontakt gebracht werden, um die Probe zu konditionieren, für die Messung vorzubereiten oder um eine erste chemische oder biologische Reaktion auszulösen. In einem zweiten Schritt wird dann eine zweite Flüssigkeit zugesetzt, um den zu bestimmenden Analyten der Probe in einen für die photometrische Messung geeigneten Zustand zu überführen oder eine zweite chemische oder biologische Reaktion auszulösen. Beispielsweise wird bei einer sogenannten CRP-Messung (C-Reaktives Protein), welche zur Unterscheidung viraler oder bakterieller Entzündungen dient, eine Blutprobe mit einer Lysereagenz vermischt und danach eine Latexreagenz zugesetzt und vermischt, wobei die chemische Reaktion mit Hilfe eines Photometers gemessen wird.

Ein Testset der eingangs genannten Art ist beispielsweise aus der WO 2007/053870 A2 bekannt. Das Testset umfasst einen Mischbehälter, sowie einen in den Mischbehälter einsetzbaren Dosierbehälter. Der Mischbehälter ist mit einem von einer Füllöffnung abnehmbaren Verschlusselement ausgestattet und beinhaltet eine erste Flüssigkeit, wobei der Dosierbehälter nach der Abnahme des Verschlusselementes und der Zugabe der Probenflüssigkeit in die erste Flüssigkeit in die Füllöffnung des Mischbehälters eingesetzt werden kann. Der Dosierbehälter weist in einem verschlossenen Hohlraum eine zweite Flüssigkeit auf, wobei der Hohlraum auf einer Seite durch einen Verschlusskolben und auf der gegenüberliegenden Seite durch einen beweglichen Stopfen verschlossen ist, welcher nach einer Druckbeaufschlagung auf den Verschlusskolben die zweite Flüssigkeit zusammen mit dem beweglichen Stopfen in das Innere des Mischbehälters befördert. Nach der Vermischung der Probe mit der ersten Flüssigkeit und der zweiten Flüssigkeit wird der Mischbehälter in einen photometrischen Analysator eingesetzt, wonach die Probeninhaltsstoffe photometrisch vermessen werden. Die bekannten Verfahren sind fehleranfällig, da exakte Probenmengen zugeführt werden müssen, die für das jeweilige Testset und den jeweiligen medizinischen Test exakt vorgeschrieben sind.

Weiters kann der Dosierbehälter gemäß AT 502 693 A1 an Stelle des Stopfens auch mit einem Ventil oder einer nicht näher dargestellten Membran verschlossen sein, wobei nach Druckbeaufschlagung auf die zweite Flüssigkeit im Inneren des Dosierbehälters die Membran zerstört wird und die Flüssigkeit in das Innere des Mischbehälters austritt. Es hat sich allerdings gezeigt, dass ein unkontrolliertes, nicht reproduzierbares Zerstören oder Zerreißen der Membran durch Druckbeaufschlagung zu nicht reproduzierbaren Messergebnissen des Testsets führt, da die Flüssigkeit unkontrolliert aus dem Dosierelement austritt und an den Wänden und den Membranrändern Tropfen der Flüssigkeit haften bleiben.

Aus der WO 2005/071388 A1 ist ein Probennahme- und Messelement bekannt geworden, welches aus mehreren zylindrischen Kompartments besteht, die axial verschiebbar ineinander gesteckt sind, wobei deren Innenräume in der Ausgangsstellung durch eine durchstoßbare Membran verschlossen sind. Zwei der Elemente enthalten Reaktionsmittel, in das dritte Element kann mit einem Tupfer eine Probe eingebracht werden. Die Kompartments werden dann durch Druckausübung auf die beiden äußeren Elemente ineinander geschoben, wodurch die Membranen an den Verbindungsstellen aufreißen und gleichzeitig die beiden Reagenzflüssigkeiten mit der Probe vermischt werden. Eine Analyse erfolgt entweder durch optische Inspektion oder durch Einsatz in ein Messgerät.

Die DE 24 41 724 A1 beschreibt eine Analysenpatrone für photospektrometrische Messungen, welche einen ersten Behälter zur Aufnahme einer ersten Flüssigkeit aufweist, wobei der Behälter zunächst durch ein Verschlusselement verschlossen ist. Nach der Abnahme des Verschlusselementes wird in den Behälter die zu analysierende Probe eingegeben und danach ein Behältereinsatz aufgesetzt, welcher in einer Hilfskammer eine Reagenzflüssigkeit aufweist. Die Hilfskammer ist mit einem in der Ausgangsstellung über den Behältereinsatz hinausragenden zylindrischen Stößel versehen, welcher beim Niederdrücken mit Hilfe einer frontseitigen Schneidkante eine Membran der Hilfskammer aufreißt und damit die zweite Flüssigkeit aus der Hilfskammer in den Behälter mit der ersten Flüssigkeit entlässt. Nachdem sich die Flüssigkeiten vollständig gelöst und vermischt haben, wird der Behälter in der für das Analyseverfahren erforderlichen Weise erwärmt und die Probe photometrisch vermessen.

Aufgabe der Erfindung ist es, ein in der Handhabung vereinfachtest photometrisches Messverfahren für eine Probenflüssigkeit vorzuschlagen, wobei ein verbessertes Testset zum Einsatz kommen soll, welches einfacher und kostengünstiger herstellbar ist. Weiters soll auf einfache Weise eine genaue Dosierung der einzelnen Reagenzien sowie der Probenflüssigkeit möglich sein.

Diese Aufgabe wird erfindungsgemäß dadurch gelöst, dass die Verschlussmembran mit einer Sollbruchstelle ausgestattet ist, die bei einer definierten Überschreitung des Fülldrucks - ausgelöst durch eine axiale Verschiebung des Verschlusskolbens - aufbricht, sowie dass die Sollbruchstelle der Verschlussmembran als eine sich linear erstreckende Materialverjüngung der Verschlussmembran ausgeführt ist, die außermittig, im Bereich einer Öffnung im Boden des im Wesentlichen zylindrischen Dosierbehälters angeordnet ist. Das erfindungsgemäße Testset führt auch bei kleineren Probenmengen zu reproduzierbaren Messergebnissen, da die Verschlussmembran an der sich linear erstreckenden Materialverjüngung definiert und reproduzierbar aufbricht und das Reagenzmittel in einer optimalen Strahlgeometrie in den Mischbehälter austreten lässt.

Bevorzugt kann die Verschlussmembran mittels 2K-Spritzgusstechnik direkt an dem in den Mischbehälter einsetzbaren Ende des Dosierbehälters angespritzt werden. Beispielsweise kann der Fülldruck im Hohlraum des Dosierbehälters nach der maschinellen Befüllung in einem Bereich < 2 bar liegen und der Berstdruck der Sollbruchstelle der Verschlussmembran im Bereich > 3 bar vorgegeben sein, sodass bei einer weiteren axialen Verschiebung des Verschlusskolbens in Richtung der Verschlussmembran der Berstdruck überschritten wird und das Reagenzmittel in den Mischbehälter austritt.

Gemäß einer erfindungsgemäßen Ausführungsvariante kann die Verschlussmembran eine vom Dosierbehälter fortragende, sich verjüngende, trichterförmige Anformung aufweisen, die das aus dem Dosierbehälter austretende Reagenzmittel auf den Bodenbereich des Mischbehälters lenkt.

Weitere Vorteile bei der Herstellung ergeben sich, wenn der Dosierbehälter in seinem Dichtbereich zur Füllöffnung des Mischbehälters eine mittels 2K-Spritzgusstechnik angespritzte Dichtmanschette aufweist, wobei die Verschlussmembran und die Dichtmanschette durch einen längs des Dosierbehälters verlaufenden Steg miteinander verbunden sind und in einem Arbeitsschritt angespritzt werden können.

Durch die Verwendung eines integrierten Probennahmesystems (siehe auch WO 2011/047902 A1) mit einer an beiden Seiten offenen Kapillare (end-to-end capillare) wird das Testset gemäß einer Ausführungsvariante für den Benutzer wesentlich anwendungsfreundlicher. Die Kapillare füllt sich nach Probenkontakt automatisch mit dem durch den inneren Durchmesser und die Länge der Kapillare vorgegebenen Volumen zwischen beispielsweise 5 µl und 25 µl, so dass der Benutzer keine separaten Pipetierschritte durchführen muss. Der Anwender muss mit dem Ende des Kapillarröhrchens lediglich die Oberfläche der Probenflüssigkeit berühren, wobei sich das Röhrchen durch die Kapillarwirkung füllt und exakt das für die jeweilige Probenmessung vorgegebene Probenvolumen aufgesogen wird.

Ein erfindungsgemäße Messverfahren, bei welchem eine Probenflüssigkeit mit einem in einem Mischbehälter vorliegenden Reagens und mit einem flüssigen Reagenzmittel vermischt wird, wobei das flüssige Reagenzmittel in einem Dosierbehälter vorliegt, dessen Hohlraum an einem Ende durch einen axial verschiebbaren Verschlusskolben und am anderen Ende durch eine Verschlussmembran verschlossen ist, zeichnet sich somit durch folgende Schritte aus:
- Öffnen des Mischbehälter;
- Zugabe der Probenflüssigkeit in den Mischbehälter;
- Einsetzen des Dosierbehälters in eine Füllöffnung des Mischbehälters;
- Vermischen der Probenflüssigkeit mit dem Reagens zu einem Vorprodukt;
- Einbringen eines flüssigen Reagenzmittels aus dem Dosierbehälter in den Mischbehälter, wobei über den axial verschiebbaren Verschlusskolben Druck auf das Reagenzmittel ausgeübt wird, bis die am Dosierbehälter angeordnete Verschlussmembran an einer Sollbruchstelle bricht und einen unter Druck austretenden Strahl des Reagenzmittels in den Mischbehälter entlässt;
- Vermischen des Vorprodukts und des flüssigen Reagenzmittels zu einem Endprodukt;
- Photometrische Messung der chemischen Reaktion in einem Analysator und
- Berechnen der Konzentration zumindest eines Probeninhaltsstoffes des Endprodukts.

Dabei kann das Reagens im Mischbehälter flüssig, gelförmig, gefriergetrocknet, in Pulver- oder Tablettenform oder als Wandfilm vorliegen.

Nach dem Vermischen des Reagens mit der Probenflüssigkeit kann eine photometrische Kalibriermessung durchgeführt werden.

Die Erfindung wird im Folgenden anhand von Zeichnungen näher erläutert. Es zeigen:
- Fig. 1: ein erfindungsgemäßes Testset mit einem Mischbehälter und einem in den Mischbehälter eingesetzten Dosierbehälter in einer Schnittdarstellung;
- Fig. 2: den Dosierbehälter des erfindungsgemäßen Testsets in einer Schnittdarstellung;
- Fig. 3: ein Detail des Dosierbehälters gemäß Ausschnitt III in Fig. 2;
- Fig. 4: eine Schnittdarstellung des Dosierbehälters gemäß Linie IV-IV in Fig. 3
- Fig. 5: eine angeschnittene, dreidimensionale Darstellung einer Ausführungsvariante des Dosierbehälters gemäß Fig. 2.
- Fig. 6: ein Detail der Ausführungsvariante gemäß Fig. 5; sowie
- Fig. 7: ein Spritzschutzelement für den Dosierbehälter in einer Schnittdarstellung.

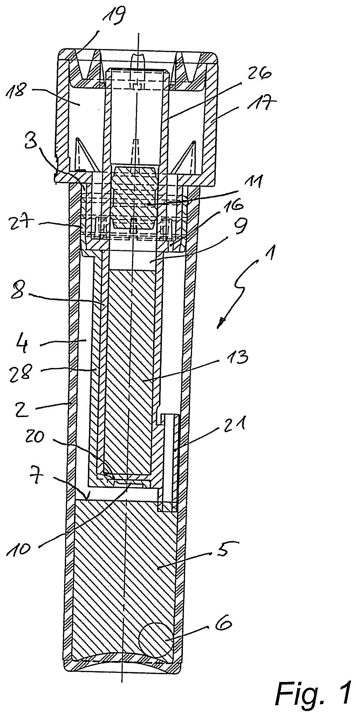

Die in den Fig. 1 bis Fig. 4 dargestellte Ausführungsvariante des Testsets 1 dient zum Einsatz in eine photometrische Messeinrichtung bzw. einen Analysator, wie beispielsweise in der WO 2007/053380 A2 ausführlich beschrieben.

Die Füllöffnung 3 des röhrchenförmigen Mischbehälters 2 des Testsets 1 ist zunächst mit einem abnehmbaren, hier nicht dargestellten Verschlusselement steril verschlossen, wobei sich im Inneren 4 gemäß dargestellter Ausführungsvariante eine erste Flüssigkeit 5 sowie ein Magnetrührstab oder eine Stahlkugel 6 befinden. Über der ersten Flüssigkeit 5 befindet sich ein Luftraum, wobei die Flüssigkeitsoberfläche mit 7 angedeutet ist.

Der in den Mischbehälter 1 einsetzbare Dosierbehälter 8 weist einen zylindrischen Hohlraum 9 auf, der an einem Ende (austrittseitig) mit einem Verschlussmembran 10 ausgestattet ist. An der gegenüberliegenden Seite befindet sich im Hohlraum 9 ein axial in den Hohlraum hinein verschiebbarer Verschlusskolben 11, auf welchen ein Betätigungsstempel eines hier nicht dargestellten Analysators Druck ausüben kann. Beim Füllen des Dosierbehälters 8 mit einem Reagenzmittel 13 wird beim Einsetzen des Verschlusskolbens 11 ein vorgebbarer Fülldruck im Reagenzmittel 13 erzeugt. Die Verschlussmembran 10 ist mit einer Sollbruchstelle 20 ausgestattest, die bei einer definierten Überschreitung des Fülldrucks - ausgelöst durch eine axiale Verschiebung des Verschlusskolbens 11 - aufbricht.

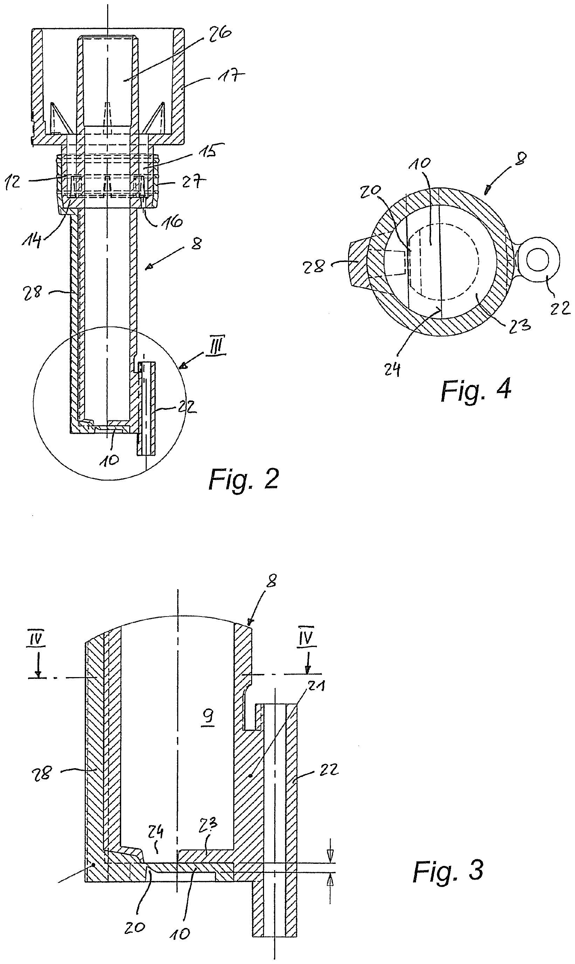

Die Sollbruchstelle 20 der Verschlussmembran 10 kann beispielsweise als eine sich linear erstreckende Materialverjüngung der Verschlussmembran 10 ausgeführt sein (siehe Fig. 3, Fig. 4), wobei die Verschlussmembran 10 vorzugsweise mittels 2K-Spritzgusstechnik an dem in den Mischbehälter 2 einsetzbaren Ende des Dosierbehälters 8 angespritzt ist. Der Dosierbehälter 8 besteht beispielsweise aus Polypropylen (PP) und die koextrudierte Verschlussmembran 10 z.B. aus einem vernetzten, thermoplastischen Elastomer auf Olefinbasis (TPE-V).

Bevorzugt ist die Materialverjüngung außermittig, im Bereich einer länglichen Öffnung 24 im Boden 23 des im Wesentlichen zylindrischen Dosierbehälters 8 angeordnet, um einen optimalen Austrag des Reagenzmittels aus dem Dosierbehälter zu gewährleisten.

Der axial verschiebbare Verschlusskolben 11 ist zur Gänze innerhalb des Dosierbehälters 8 angeordnet und wird von einem Stempel des Analysators betätigt. Eine irrtümliche Fehlbetätigung durch das Laborpersonal ist dadurch weitgehend ausgeschlossen. Der Hohlraum 9 weist im Bereich des Dichtsitzes des Verschlusskolbens 11 einen geringfügig kleineren Innendurchmesser auf, als in einem außerhalb des Dichtsitzes liegenden Kragenbereich 26. Bei der Fertigung kann der Verschlusskolben 11 ohne wesentlichen Reibung bis zum Dichtsitz herangeführt und dann in den Dichtsitz eingepresst werden, wobei ein vorgebbarer Fülldruck im Reagenzmittel entsteht. Unterschiedliche Füllmengen des Reagenzmittels können auf einfache Weise durch unterschiedliche Höhenlage des Dichtsitzes realisiert werden.

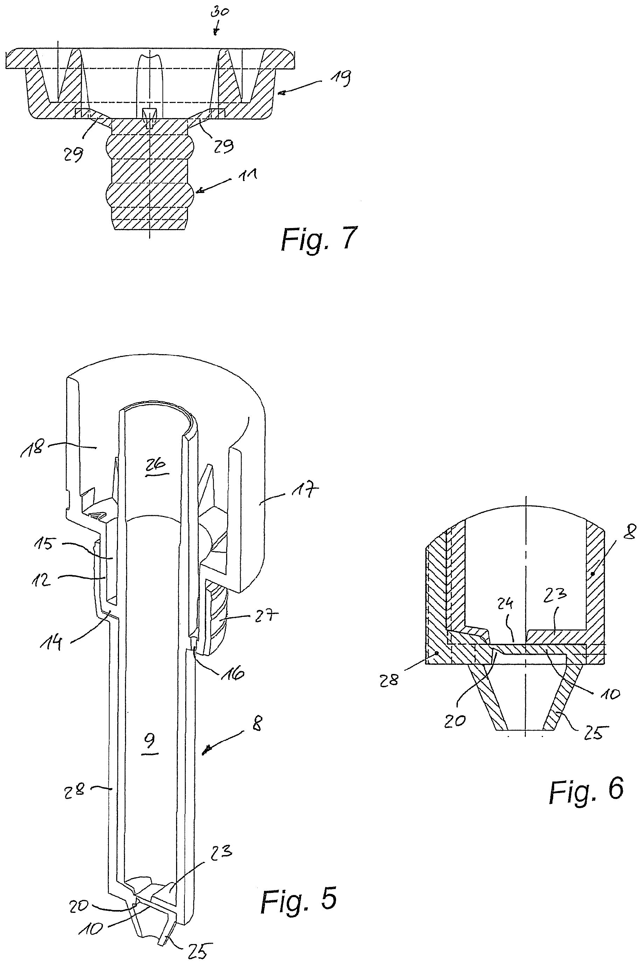

Um den unter Druck austretenden Strahl des Reagenzmittels von den Wänden des Mischbehälters 2 fernzuhalten, kann - gemäß einer Ausführungsvariante - die Verschlussmembran 10 eine vom Dosierbehälter 8 fortragende, sich verjüngende, trichterförmige Anformung 25 aufweisen (siehe Fig. 5, Fig. 6).

Zum Einsatz in den Mischbehälter 2 weist der Dosierbehälter 8 eine zylindrische Dichtfläche 12 auf, die am Dosierbehälter 8 mit einem Ringflansch 14 angeformt ist und einen Ringraum 15 bildet, wobei im Ringflansch 14 zumindest eine Entlüftungsöffnung 16 angeordnet ist (siehe auch Fig. 2 und Fig. 5). Beim Einsetzen des Dosierbehälters 8 in den Mischbehälter 2 kann die vom Dosierbehälter 8 verdrängte Luft aus dem Inneren 4 durch die gasdurchlässige, annähernd tropfendichte Entlüftungsöffnung 16 entweichen. Zur besseren Abdichtung weist der Dosierbehälter 8 in seinem Dichtbereich zur Füllöffnung 3 des Mischbehälters 2 eine vorzugsweise mittels 2K-Spritzgusstechnik angespritzte Dichtmanschette 27 auf.

Die Dichtmanschette 27 und die Verschlussmembran 10 bestehen bevorzugt aus dem selben, im Vergleich mit dem Dosierbehälter 8 weicher eingestellten Kunststoffmaterial und sind durch einen längs des Dosierbehälters 8 verlaufenden Steg 28 miteinander verbunden, wodurch die Herstellung mittels 2K-Spritzgusstechnik vereinfacht wird.

Der Dosierbehälter 8 kann eine Probennahmeeinrichtung 21 in Form einer beidseitig offenen Kapillare 22 aufweisen, deren Volumen exakt auf die Anforderungen des jeweiligen Messverfahrens abgestimmt ist und vorzugsweise zwischen 5 µl und 50 µl liegt. Der Benutzer muss die seitlich am Dosierbehälter 8 befestigte und über den Endbereich des Dosierbehälters 8 hinausragende Kapillare 22 lediglich mit der Oberfläche der zu vermessenden Probenflüssigkeit in Kontrakt bringen, wonach die Probenflüssigkeit automatisch mittels Kapillarwirkung und in der durch das Volumen der Kapillare 22 vorgegebenen Menge in die Probennahmeeinrichtung 21 eingesogen wird.

Anschließend an die zylindrische Dichtfläche 12 des Dosierbehälters 8 ist ein zylindrisches oder ergonomisch optimiertes Griffelement 17 angeformt, das einen Ringraum 18 begrenzt und nach außen durch ein ringförmiges Spritzschutzelement 19 abschließbar ist. Durch das Spritzschutzelement 19 kann der Austritt von Flüssigkeit aus dem Testset 1 wirksam verhindert werden.

Wie in Fig. 7 dargestellt, kann das ringförmige Spritzschutzelement 19 und der axial verschiebbare Verschlusskolben 11 als einstückiges Spritzgussteil 30 hergestellt werden, wobei dünne, aufbrechbare oder abtrennbare Verbindungsstege 29 zwischen dem Spritzschutzelement 19 und dem Verschlusskolben 11 vorgesehen sind. Nach dem maschinellen Befüllen des Dosierbehälters 8 mit dem Reagenzmittel 13 können in einem Arbeitsgang das Spritzschutzelement 29 in das Griffelement 17 und der Verschlusskolben 11 in den Dosierbehälter eingesetzt werden. Bei der axialen Verschiebung des Verschlusskolbens 11 in seine Lage im Dichtsitz werden die Verbindungsstege 29 abgetrennt.

### Erstes Beispiel: INR/PT Test

Die INR-Bestimmung ist ein Test dafür, wie schnell das Blut eines Menschen gerinnt. Der Normalwert von INR ist 1, bei einem INR Wert von z.B. 4 gerinnt das Blut viermal langsamer. Ein hoher INR-Wert bedeutet also, dass die Blutgerinnung nicht so gut funktioniert wie bei gesunden Menschen.

Für die Untersuchung verwendet man Vollblut das direkt vom Patienten abgenommen und in die Kapillare eingebracht wird oder Blutplasma aus mit Zitrat versetzten Abnahmeröhrchen.

Im Mischbehälter 2 befindet sich das erste INR Test Reagens (erste Flüssigkeit 5), im Dosierbehälter 8 das zweite INR Reagens (flüssiges Reagenzmittel 13, siehe Fig. 1).

Testablauf des INR Tests:
- Blutprobe wird mit der Kapillare 22 des Dosierbehälters 8 kontaktiert und ein definiertes Probenvolumen eingesogen;
- Mischbehälter 2 ist zunächst mit einem Verschlusselement verschlossen und mit Lysereagenz (80 µl - 150 µl) gefüllt;
- Verschlusselement wird entfernt, Dosierbehälter (enthält Latexreagenz) wird mitsamt der integrierten Kapillare 22 in den Mischbehälter 2 dichtend eingesetzt;
- Mischbehälter 2 und Dosierbehälter 8 werden in verschlossenem Zustand geschüttelt bis Probenflüssigkeit aus der end-to-end Kapillare 22 in den Mischbehälter 2 ausgetreten ist;
- Mischbehälter 2 und Dosierbehälter 8 werden in eine Messeinrichtung (z.B. Analysator aus WO 2007/053380 A2) eingesetzt;
- Testidentifikation durch die Messeinrichtung (durch RFID-Chip in der Verpackung oder auf dem Mischbehälter);
- Lysereagenz und Probenflüssigkeit werden mit Hilfe eines Magnetrührers der Messeinrichtung vermischt (optional);
- Kalibrierwert wird gemessen (optional)
- Latexreagenz (50 µl - 200 µl) wird mit Hilfe eines Stempels der Messeinrichtung durch Druck auf den Verschlusskolben 11 zudosiert, wobei die Verschlussmembran 10 an deren Sollbruchstelle 20 aufreißt;
- Lysereagenz, Probenflüssigkeit und Latexreagenz werden mit Hilfe des Magnetrührers vermischt;
- Chemische Reaktion wird mit Hilfe des Photometers gemessen;
- Gerinnungszeit wird bestimmt.

Der Messbereich der photometrischen Messeinrichtung liegt beispielsweise bei INR 0,5 - INR 5.

### Zweites Beispiel: HCY-Test

Chemisch gesehen gehört Homocystein (HCY) zu der Gruppe der sog. Aminosäuren. Im Körper wird Homocystein aus Methionin, einer anderen Aminosäure gebildet, die mit der Nahrung zugeführt wird. Homocystein wird normalerweise schnell wieder abgebaut, wobei Vitamin B6 (Pyridoxin), Vitamin B12 (Cobalamin) und Folsäure benötigt werden.

Homocystein konnte als eigenständiger Risikofaktor für atherosklerotische oder thromboembolische Ereignisse (periphere arterielle Verschlusskrankheit, Schlaganfall, koronare Herzkrankheit (Herzenge, Herzinfarkt), verengende Veränderung der Halsschlagader) identifiziert werden. Bei einer Reihe von weiteren Erkrankungen wie Altersdemenz, Entwicklung von Neuralrohrdefekten (Spina bifida) des Kindes Mutterleib und Blutarmut (Anämie) wurde ein Zusammenhang mit erhöhten Homocysteinspiegeln festgestellt.

Im Mischbehälter 2 befindet sich die erste HCY-Reagenz, im Dosierbehälter 8 die zweite HCY-Reagenz. Der Testablauf erfolgt wie im Beispiel 1.

Zielbereich für Homocystein ist unter 10 µmol/l im Serum.

### Drittes Beispiel: CRP -Test

Als drittes Beispiel wird ein Messablauf eines CRP Tests (C- Reaktives Protein, dient hauptsächlich zur Unterscheidung viraler oder bakterieller Entzündung) dargestellt.

Im Mischbehälter 2 befindet sich als erste Flüssigkeit eine Lysereagenz (1000 µl). Mit der Kapillare 22 des Dosierbehälters 8 werden 5 µl Vollblut aufgesogen. Der Dosierbehälter 8 enthält eine Latexreagenz (250 µl). Zunächst wird die Lysereagenz mit der Vollblutprobe vermischt und ein Kalibrierwert gemessen. Danach wird die Latexreagenz zudosiert und nach der chemischen Reaktion der Konzentrationswert photometrisch bestimmt. Der Testablauf erfolgt wie im Beispiel 1

Der Messbereich der photometrischen Messeinrichtung liegt beispielsweise bei 0,2 mg/dl bis 6 mg/dl.

### Viertes Beispiel: Variante des INR/PT Tests

Im Unterschied zum ersten Beispiel liegt das erste INR Test Reagens als trockenchemische Beschichtung (z.B. Rekombinant Thromboplastin), oder auch als Gel, Pulver oder Tablette im Mischbehälter 2 vor, wobei der Dosierbehälter 8 das zweite INR Reagens als flüssiges Reagenzmittel enthält. Verwendung findet ein Dosierbehälter 8 gemäß Fig. 5 mit einer Verschlussmembran 10 samt Sollbruchstelle 20 und einer trichterförmiger Anformung 25 (ohne Verschlusskolben 11 und Reagenzmittel 13 dargestellt).

Die Probe, beispielsweise 20 µl Kapillarblut, wird hier per Hand mittels Kapillare in den Mischbehälter 2 dosiert, wonach sich die trockenchemische Beschichtung zumindest teilweise auflösen kann. Danach wird der Dosierbehälter 8 mit dem flüssigen Reagenzmittel (z.B. Bufferlösung) in den Mischbehälter eingesetzt. Der weitere Testablauf erfolgt wie im Beispiel 1.

Der Messbereich der photometrischen Messeinrichtung liegt hier beispielsweise bei INR 1 - INR 6.

Als Vorteile des erfindungsgemäßen Testsets sind insbesondere anzuführen:
- Anwender muss keine separaten Pipetierschritte durchführen;
- hohe Genauigkeit des aufgenommen Probenvolumens;
- große Zeitersparnis bei der Probennahme;
- Kostenersparnis durch Wegfall separater Probennahmeeinrichtungen.

## Patentansprüche

1. Testset (1) für eine photometrische Messeinrichtung, mit einem Mischbehälter (2) der eine Füllöffnung (3) aufweist, sowie mit einem dichtend in die Füllöffnung (3) des Mischbehälters (2) einsetzbaren Dosierbehälter (8), der in einem verschlossenen Hohlraum (9) ein flüssiges Reagenzmittel (13) enthält, wobei der Hohlraum (9) an einem ersten Ende des Dosierbehälters (8) einen in den Hohlraum (9) axial verschiebbaren Verschlusskolben (11) aufweist, der einen vorgebbaren Fülldruck im Reagenzmittel (13) erzeugt und der Dosierbehälter (8) an seinem zweiten, in den Mischbehälter (2) einsetzbaren Ende eine Verschlussmembran (10) aufweist, **dadurch gekennzeichnet, dass** die Verschlussmembran (10) mit einer Sollbruchstelle (20) ausgestattet ist, die bei einer definierten Überschreitung des Fülldrucks - ausgelöst durch eine axiale Verschiebung des Verschlusskolbens (11) - aufbricht, sowie dass die Sollbruchstelle (20) der Verschlussmembran (10) als eine sich linear erstreckende Materialverjüngung der Verschlussmembran (10) ausgeführt ist, die außermittig, im Bereich einer Öffnung (24) im Boden (23) des im Wesentlichen zylindrischen Dosierbehälters (8) angeordnet ist.

2. Testset (1) nach Anspruch 1, **dadurch gekennzeichnet, dass** die Verschlussmembran (10) vorzugsweise mittels 2K-Spritzgusstechnik an dem in den Mischbehälter (2) einsetzbaren Ende des Dosierbehälters (8) angespritzt ist.

3. Testset (1) nach Anspruch 1 oder 2, **dadurch gekennzeichnet, dass** der Fülldruck im Hohlraum (9) des Dosierbehälters (8) in einem Bereich < 2 bar liegt und der Berstdruck der Sollbruchstelle (2) der Verschlussmembran (10) im Bereich > 3 bar liegt.

4. Testset (1) nach einem der Ansprüche 1 bis 3, **dadurch gekennzeichnet, dass** die Verschlussmembran (10) eine vom Dosierbehälter (8) fortragende, sich verjüngende, trichterförmige Anformung (25) aufweist.

5. Testset (1) nach einem der Ansprüche 1 bis 4, **dadurch gekennzeichnet, dass** der axial verschiebbare Verschlusskolben (11) zur Gänze innerhalb des Dosierbehälters (8) angeordnet ist, wobei der Hohlraum (9) im Bereich des Dichtsitzes des Verschlusskolbens (11) einen geringfügig kleineren Innendurchmesser aufweist, als in einem außerhalb des Dichtsitzes liegenden Kragenbereich 26.

6. Testset (1) nach einem der Ansprüche 1 bis 5, **dadurch gekennzeichnet, dass** der Dosierbehälter (8) in seinem Dichtbereich zur Füllöffnung (3) des Mischbehälters (2) eine mittels 2K-Spritzgusstechnik angespritzte Dichtmanschette (27) aufweist.

7. Testset (1) nach Ansprüche 6, **dadurch gekennzeichnet, dass** die Verschlussmembran (10) und die Dichtmanschette (27) durch einen längs des Dosierbehälters (8) verlaufenden Steg (28) verbunden sind.

8. Testset (1) nach einem der Ansprüche 1 bis 7, **dadurch gekennzeichnet, dass** der Dosierbehälter (8) an dem in den Mischbehälter (2) einführbaren Ende eine integrierte Probennahmeeinrichtung (21) aufweist, die nach dem Einsetzen des Dosierbehälters (8) in die Füllöffnung (3) des Mischbehälters (2) mit einer im Mischbehälter (2) vorliegenden Flüssigkeit (5) in Kontakt steht.

9. Testset (1) nach Anspruch 8, **dadurch gekennzeichnet, dass** die Probennahmeeinrichtung (21) eine beidseitig offene Kapillare (22) aufweist, deren Volumen vorzugsweise zwischen 5 µl und 50 µl liegt.

10. Testset (1) nach einem der Ansprüche 1 bis 9, **dadurch gekennzeichnet, dass** am Dosierelement (8) ein beispielsweise zylindrisches oder ergometrisch optimiertes Griffelement (17) angeformt ist, das einen Ringraum (18) begrenzt und nach außen durch ein ringförmiges Spritzschutzelement (19) abschließbar ist.

11. Testset (1) nach Anspruch 10, **dadurch gekennzeichnet, dass** das ringförmige Spritzschutzelement (19) und der axial verschiebbare Verschlusskolben (11) als einstückiges Spritzgussteil (30) herstellbar sind, wobei dünne, aufbrechbare oder abtrennbare Verbindungsstege (29) zwischen dem Spritzschutzelement (19) und dem Verschlusskolben (11) vorgesehen sind.

12. Photometrisches Messverfahren bei welchem eine Probenflüssigkeit mit einem in einem Mischbehälter (2) vorliegenden Reagens und mit einem flüssigen Reagenzmittel (13) vermischt wird, wobei das flüssige Reagenzmittel in einem Dosierbehälter (8) vorliegt, dessen Hohlraum (9) an einem Ende durch einen axial verschiebbaren Verschlusskolben (11) und am anderen Ende durch eine Verschlussmembran (10) verschlossen ist, **gekennzeichnet durch** folgende Schritte:
- Öffnen des Mischbehälters (1);
- Zugabe der Probenflüssigkeit in den Mischbehälter (2);
- Einsetzen des Dosierbehälters (8) in eine Füllöffnung (3) des Mischbehälters (2);
- Vermischen der Probenflüssigkeit mit dem Reagens zu einem Vorprodukt
- Einbringen eines flüssigen Reagenzmittels (13) aus dem Dosierbehälter (8) in den Mischbehälter (2), wobei über den axial verschiebbaren Verschlusskolben (11) Druck auf das Reagenzmittel (13) ausgeübt wird, bis die am Dosierbehälter (8) angeordnete Verschlussmembran (10) an einer Sollbruchstelle (20) bricht, und einen unter Druck austretenden Strahl des Reagenzmittels (13) in den Mischbehälter (2) entlässt;
- Vermischen des Vorprodukts und des flüssigen Reagenzmittels (13) zu einem Endprodukt;
- Photometrische Messung der chemischen Reaktion in einem Analysator und
- Berechnen der Konzentration zumindest eines Probeninhaltsstoffes des Endprodukts.

13. Messerverfahren nach Anspruch 12, **dadurch gekennzeichnet, dass** nach dem Vermischen des Reagens mit der Probenflüssigkeit eine photometrische Kalibriermessung durchgeführt wird.

14. Messerverfahren nach Anspruch 12 oder 13, **dadurch gekennzeichnet, dass** das Reagens im Mischbehälter (2) flüssig, gelförmig, gefriergetrocknet, in Pulver- oder Tablettenform oder als Wandfilm vorliegt.

## Claims

1. A test set (1) for a photometric measuring device, comprising a mixing container (2) which has a filling opening (3), and a dosing container (8) which can be inserted in a sealing manner into the filling opening (3) of the mixing container (2) and which contains a liquid reagent (13) in a closed cavity (9), wherein the cavity (9) comprises a closing plunger (11) which can be moved axially in the cavity (9), at a first end of the dosing container (8), which closing plunger generates a predeterminable filling pressure in the reagent (13), and the dosing container (8) comprises a closure membrane (10) at the second dosing container end which can be inserted into the mixing container (2), **characterised in that** the closure membrane (10) is provided with a predetermined breaking point (20), which breaks open when the filling pressure is exceeded in a defined manner, triggered by an axial movement of the closing plunger (11), and the predetermined breaking point (20) of the closure membrane (10) is formed as a linearly extending material taper of the closure membrane (10), which taper is arranged eccentrically in the region of an opening (24) in the base (23) of the substantially cylindrical dosing container (8).

2. A test set (1) according to claim 1, **characterised in that** the closure membrane (10) is injected, preferably by means of 2K injection molding technology, onto the end of the dosing container (8) which can be inserted into the mixing container (2).

3. A test set (1) according to claim 1 or 2, **characterised in that** the filling pressure in the cavity (9) of the dosing container (8) lies in a range of < 2 bars and the burst pressure of the predetermined breaking point (20) of the closure membrane (10) lies in the range of > 3 bars.

4. A test set (1) according to one of the claims 1 to 3, **characterised in that** the closure membrane (10) comprises a tapering, funnel-shaped, integrally attached formed portion (25) which carries away from the dosing container (8).

5. A test set (1) according to one of the claims 1 to 4, **characterised in that** the axially displaceable closing plunger (11) is arranged entirely within the dosing container (8), wherein the cavity (9) has a slightly smaller inside diameter in the region of the seal seat of the closing plunger (11) than in a collar region (26) situated outside of the seal seat.

6. A test set (1) according to one of the claims 1 to 5, **characterised in that** the dosing container (8) comprises in its sealing region toward the filling opening (3) of the mixing container (2) a sealing collar (27) which is injected thereon by means of 2K injection-molding technology.

7. A test set (1) according to claim 6, **characterised in that** the closure membrane (10) and the sealing collar (27) are connected by a web (28) extending along the dosing container (8).

8. A test set (1) according to one of the claims 1 to 7, **characterised in that** the dosing container (8) comprises an integrated sample-taking device (21) at the end insertable into the mixing container (2), which sample-taking device is in contact with a liquid (5) present in the mixing container (2) after the insertion of the dosing container (8) into the filling opening (3).

9. A test set (1) according to claim 8, **characterised in that** the sample-taking device (21) comprises a capillary (22) which is open on both sides and whose volume preferably lies between 5 µl and 50 µl.

10. A test set (1) according to one of the claims 1 to 9, **characterised in that** a handle element (17), which is cylindrical or ergometrically optimized for example, is integrally formed on the dosing element (8), which handle element delimits an annular space (18) and can be sealed to the outside by an annular splash protection element (19).

11. A test set (1) according to claim 10, **characterised in that** the annular splash protection element (19) and the axially displaceable closing plunger (11) can be produced as an integral injection-molded component (30), wherein thin, breakable or severable connecting webs (29) are provided between the splash protection element (19) and the closing plunger (11).

12. A photometric measuring method, in which a sample liquid is mixed with a reagent present in a mixing container (2) and with a liquid reagent (13), wherein the liquid reagent is present in a dosing container (8) whose cavity (9) is sealed at one end by an axially displaceable closing plunger (11) and at the other end by a closure membrane (10), **characterised by** the following steps:
- opening of the mixing container (1);
- adding the sample liquid to the mixing container (2);
- inserting the dosing container (8) into a filling opening (3) of the mixing container (2);
- mixing of the sample liquid with the reagent to form a preliminary product;
- introducing a liquid reagent (13) from the dosing container (8) into the mixing container (2), with pressure being exerted on the reagent (13) by the axially displaceable closing plunger (11) until the closure membrane (10) arranged on the dosing container (8) breaks open at a predetermined breaking point (20) and discharges a jet of the reagent (13) exiting under pressure into the mixing container (2);
- mixing of the preliminary product and the liquid reagent (13) to an end product;
- photometric measurement of the chemical reaction in an analyzer, and
- calculating the concentration of at least one sample ingredient of the end product.

13. A measuring method according to claim 12, **characterised in that** a photometric calibration measurement is carried out after the mixing of the reagent with the sample liquid.

14. A measuring method according to claim 12 or 13, **characterised in that** the reagent is present in the mixing container (2) in a liquid, gel-like, freeze-dried, powder or tablet form, or as a wall film.

## Revendications

1. Ensemble de test (1) destiné à un dispositif de mesure photométrique comprenant un récipient de mélange (2) comportant une ouverture de remplissage (3) ainsi qu'un récipient de dosage (8) pouvant être inséré hermétiquement dans l'ouverture de remplissage (3) du récipient de mélange (2) et qui renferme dans une cavité fermée (9) un agent réactif liquide (13), la cavité (9) comportant, à une première extrémité du récipient de dosage (8), un piston de fermeture (11) mobile en translation axiale dans la cavité (9), et qui produit une pression de remplissage prédéfinie dans l'agent réactif (13), le récipient de dosage (8) comprenant une membrane de fermeture (10) à sa seconde extrémité pouvant être insérée dans le réservoir de mélange (2),
**caractérisé en ce que**
la membrane de fermeture (10) est équipée d'un emplacement de rupture de consigne (20) qui, se rompt, en présence d'un dépassement défini de la pression de remplissage - déclenché par une translation axiale du piston de fermeture (11) - et l'emplacement de rupture de consigne (20) de la membrane de fermeture (10) est réalisé sous la forme d'une diminution de l'épaisseur du matériau de la membrane de fermeture (10) s'étendant linéairement située dans une position centrale dans la zone d'une ouverture (24) située au fond (23) du récipient de dosage (8) qui est essentiellement cylindrique.

2. Ensemble de test (1) conforme à la revendication 1,
**caractérisé en ce que**
la membrane de fermeture (10) est injectée, de préférence par la technique de moulage par injection 2K à l'extrémité du récipient de dosage (8) pouvant être insérée dans le réservoir de mélange (2).

3. Ensemble de test (1) conforme à la revendication 1 ou 2,
**caractérisé en ce que**
la pression de remplissage dans la cavité (9) du récipient de dosage (8) est située dans une plage inférieure à 2 bars et la pression d'éclatement de l'emplacement de rupture de consigne (2) de la membrane de fermeture (10) est située dans une plage supérieure à 3 bars.

4. Ensemble de test (1) conforme à l'une des revendications 1 à 3,
**caractérisé en ce que**
la membrane de fermeture (10) comporte une conformation (25) s'étendant à partir du récipient de dosage (8) et s'amincissant, en forme d'entonnoir.

5. Ensemble de test (1) conforme à l'une des revendications 1 à 4,
**caractérisé en ce que**
le piston de fermeture (11) mobile en translation axiale est totalement monté à la partie interne du récipient de dosage (8), la cavité (9) ayant, dans la zone du siège d'étanchéité du piston de fermeture (11) un diamètre interne un peu inférieur à son diamètre interne dans une zone de collerette (26) située à l'extérieur du siège d'étanchéité.

6. Ensemble de test (1) conforme à l'une des revendications 1 à 5,
**caractérisé en ce que**
le récipient de dosage (8), comporte, dans sa zone d'étanchéité par rapport à l'ouverture de remplissage (3) du récipient de mélange (2) un manchon d'étanchéité (27) injecté par la technique de moulage par injection 2K.

7. Ensemble de test (1) conforme à la revendication 6,
**caractérisé en ce que**
la membrane de fermeture (10) et le manchon d'étanchéité (27) sont reliés par une barrette (28) s'étendant le long du récipient de dosage (8).

8. Ensemble de test (1) conforme à l'une des revendications 1 à 7,
**caractérisé en ce que**
le récipient de dosage (8) comporte, à son extrémité pouvant être insérée dans le réservoir de mélange (2) un dispositif de prélèvement d'échantillon (21) intégré qui, après l'insertion du récipient de dosage (8) dans l'ouverture de remplissage (3) du récipient de mélange (2) vient en contact avec un liquide (5) renfermé dans le récipient de mélange (2).

9. Ensemble de test (1) conforme à la revendication 8,
**caractérisé en ce que**
le dispositif de prélèvement d'échantillon (21) comporte un capillaire (22) ouvert de part et d'autre dont le volume est de préférence situé entre 5 µl et 50 µl.

10. Ensemble de test (1) conforme à l'une des revendications 1 à 9,
**caractérisé en ce que**
sur l'élément de dosage (8) est formé un élément de saisie (17) cylindrique ou ayant une forme optimisée du point de vue ergométrique qui délimite une chambre annulaire (18) et peut être fermé vers l'extérieur par un élément de protection anti-éclaboussures annulaire (19).

11. Ensemble de test (1) conforme à la revendication 10,
**caractérisé en ce que**
l'élément de protection anti-éclaboussures annulaire (19) et le piston de fermeture mobile en translation axiale (11) peuvent être fabriqués sous la forme d'une pièce (30) moulée par injection en une seule partie, des barrettes de liaison minces, cassantes ou découpables (29) étant prévues entre l'élément de protection anti-éclaboussures (19) et le piston de fermeture (11).

12. Procédé de mesure photométrique selon lequel un liquide échantillon est mélangé à un réactif renfermé dans un récipient de mélange (2) et à un agent réactif liquide (13), l'agent réactif liquide étant renfermé dans un récipient de dosage (8) dont la cavité (9) est fermée à l'une de ses extrémités par un piston de fermeture mobile en translation axiale (11) et à son autre extrémité par une membrane de fermeture (10),
**caractérisé en ce qu'**
il comporte les étapes suivantes consistant à :
- ouvrir le récipient de mélange (1),
- ajouter le liquide échantillon dans le récipient de mélange (2),
- insérer le récipient de dosage (8) dans une ouverture de remplissage (3) du récipient de mélange (2),
- mélanger le liquide échantillon avec le réactif pour obtenir un produit préalable,
- transférer un agent réactif liquide (13) du récipient de dosage (8) dans le récipient de mélange (2), par l'intermédiaire du piston de fermeture mobile en translation axiale (11) une pression étant exercée sur l'agent réactif (13) jusqu'à ce que la membrane de fermeture (10) montée sur le récipient de dosage (8) se rompe au niveau d'un emplacement de rupture de consigne (20) et envoie un jet sortant sous pression de l'agent réactif (13) dans le récipient de mélange (2),
- mélanger le produit préalable et l'agent réactif liquide (13) pour obtenir un produit final,
- effectuer une mesure photométrique de la réaction chimique dans un analyseur, et
- calculer la concentration d'au moins un composant échantillon du produit final.

13. Procédé de mesure conforme à la revendication 12,
**caractérisé en ce qu'**
après le mélange du réactif avec le liquide échantillon, une mesure de calibrage photométrique est effectuée.

14. Procédé de mesure conforme à la revendication 12 ou 13,
**caractérisé en ce que**
le réactif se présente dans le récipient de mélange (2) sous la forme d'un liquide, d'un gel d'un produit séché par congélation, d'une poudre, de comprimés ou sous la forme d'une pellicule de paroi.
